# EUROPEAN PATENT SPECIFICATION

(11) **EP 3 640 556 B1**
(45) Date of publication and mention of the grant of the patent: **19.03.2025**
(21) Application number: 17911339.4
(22) Date of filing: 24.05.2017
(51) Int. Cl.: F24F 11/30, F25B 49/00, F24F 11/86, F24F 11/77, F24F 11/65, F24F 11/61, F25B 49/02, F25B 13/00

(54) **AIR CONDITIONER**
KLIMAANLAGE
CLIMATISEUR

(43) Date of publication of application: 22.04.2020
(73) Proprietor: Carrier Japan Corporation, Tokyo 141-0032 (JP)
(72) Inventor: UESHIGE, Jun, Fuji-shi Shizuoka 416-8521 (JP); SUITO, Shoichiro, Fuji-shi Shizuoka 416-8521 (JP); JISAROJITO, Teerasut, Fuji-shi Shizuoka 416-8521 (JP); SASAKI, Ryosuke, Fuji-shi Shizuoka 416-8521 (JP)
(74) Representative: Gramm, Lins & Partner Patent- und Rechtsanwälte PartGmbB
(86) International application number: PCT/JP2017/019344
(87) International publication number: WO 2018/216130

(56) References cited:
- EP-A1- 2 840 324
- JP-A- 2001 141 289
- JP-A- 2001 272 082
- JP-A- 2005 147 609
- JP-A- 2005 147 610
- JP-A- 2006 125 660
- JP-A- 2011 226 694
- JP-A- 2014 016 095
- JP-A- H 109 645
- JP-A- H0 413 051
- JP-A- H06 180 165
- JP-A- H07 233 995
- JP-A- H08 226 732
- JP-B2- 5 902 521

## Description

### [Technical Field]

The present invention relates to an air conditioner.

### [Background]

There is a separate-type air conditioner including an indoor unit and an outdoor unit. Air conditioners of this type generally have a control unit that controls each drive unit of an indoor unit and an outdoor unit on the outdoor unit side. Such a control unit has a storage unit that stores information related to operations of an indoor unit and an outdoor unit (which will be referred to as "operation information" below). The storage unit stores, for example, a cumulative operation time of each drive unit such as a compressor.

Operation information is collected, for example, when an abnormality or a failure occurs and is used to identify the cause. A maintenance engineer can perform maintenance work suitable for the identified cause to protect the product. In addition, operation information is utilized, for example, as marketing information for product development. Developers can make efforts to protect products by ascertaining trends in product usage and the like from operation information and applying design according to the outcome and the like. Furthermore, developers can make efforts to protect products by causing air conditioners to operate according to operation information.

However, operation information stored in conventional air conditioners is not necessarily sufficient and is thus less likely to satisfactorily contribute to protection of the products.

### [Citation List]

### [Patent Literature]

[Patent Literature 1]
   Japanese Unexamined Patent Application, First Publication No. 2001-272082
[Patent Literature 2]
   JP 5 902521 B2
[Patent Literature 3]
   JP H08 226732 A
[Patent Literature 4]
   JP 2006 125660 A
[Patent Literature 5]
   JP H10 9645 A
[Patent Literature 6]
   EP 2 840 324 A1
[Patent Literature 7]
   JP 2005 147609 A
[Patent Literature 8]
   JP 2005 147610A
[Patent Literature 9]
   JP H04 13051 A
[Patent Literature 10]
   JP 2011 226694 A
[Patent Literature 11]
   JP H06 180165 A
[Patent Literature 12]
   JP 2001 141289 A
[Patent Literature 13]
   JP 2014 016095 A
[Patent Literature 14]
   JP H07 233995 A

### [Summary of Invention]

### [Technical Problem]

An object of the present invention is to provide an air conditioner that can provide operation information that contributes to more effective protection of the product.

### [Solution to Problem]

An air conditioner of an embodiment according to claim 1 is an air conditioner with an outdoor unit and an indoor unit and includes a recording unit. The recording unit records an operation time of a compressor included in the outdoor unit for each outside air temperature range.

### [Brief Description of The Drawings]

Fig. 1 is a diagram illustrating a configuration example of an air conditioner 1 according to a first embodiment not included in the scope of the protection and a third embodiment included in the scope of the protection of the present invention.
Fig. 2 is a block diagram illustrating a specific example of a functional configuration of a control unit 40 according to the first embodiment not included in the scope of the protection.
Fig. 3 is a table showing a specific example of operation information according to the first embodiment not included in the scope of the protection.
Fig. 4 is a table showing a detailed specific example of operation times recorded in the first embodiment not included in the scope of the protection.
Fig. 5 is a flowchart showing a flow of a process of the air conditioner 1 of the first embodiment to record operation information.
Fig. 6 is a diagram illustrating a specific example of a functional configuration of a control unit 40a according to a second embodiment not included in the scope of the protection.
Fig. 7 is a diagram illustrating a specific example of a functional configuration of a control unit 41b according to a third embodiment embodiment included in the scope of the protection of the present invention.

### [Description of Embodiments]

Air conditioners according to embodiments will be described below with reference to the drawings.

### (First embodiment)

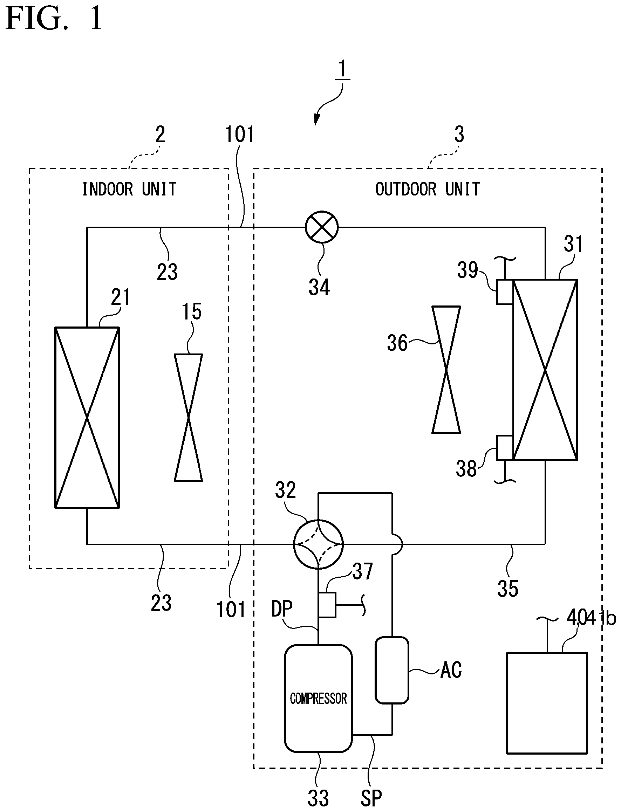

Fig. 1 is a diagram illustrating a configuration example of an air conditioner 1 according to a first embodiment. The air conditioner 1 includes an indoor unit 2 and an outdoor unit 3. The indoor unit 2 and the outdoor unit 3 are connected via crossover piping 101.

The indoor unit 2 includes an indoor heat exchanger 21, an indoor piping 23, and an indoor blower 24. The indoor heat exchanger 21 is, for example, a finned tube heat exchanger.

The indoor piping 23 connects the indoor heat exchanger 21 to the crossover piping 101. The indoor blower 24 has, for example, a centrifugal fan. The fan of the indoor blower 24 is disposed to face the indoor heat exchanger 21.

The outdoor unit 3 includes an outdoor heat exchanger 31, a four-way valve 32, a compressor 33, an outdoor expansion valve 34, an outdoor piping 35, an outdoor blower 36, a discharge pressure sensor 37, a heat exchanger temperature sensor 38, an outside temperature sensor 39 (temperature sensor), and a control unit 40. The control unit 40 controls operations of each functional unit included in the indoor unit 2 and the outdoor unit 3.

The outdoor heat exchanger 31 is, for example, a finned tube heat exchanger. The four-way valve 32 is a valve for switching a direction of a refrigerant flowing in the air conditioner 1 to a flow direction of a heating operation or a flow direction of a cooling operation or a defrosting operation.

The compressor 33 sucks a refrigerant from an inlet SP and the refrigerant is compressed in the compressor 33. The compressor 33 discharges the compressed refrigerant from an outlet DP to the outside. An accumulator AC for separating a refrigerant into a liquid refrigerant and a gas refrigerant is attached to the inlet SP of the compressor 33.

The outdoor expansion valve 34 is, for example, an electronic expansion valve (pulse motor valve or a PMV). The outdoor expansion valve 34 can change an opening degree. The outdoor piping 35 connects the outdoor heat exchanger 31, the four-way valve 32, the compressor 33, the outdoor expansion valve 34, and the accumulator AC. The outdoor blower 36 is configured similarly to the indoor blower 24.

The discharge pressure sensor 37 detects a pressure of a refrigerant discharged from the compressor 33. In this example, the discharge pressure sensor 37 detects a pressure of a refrigerant at the outlet DP of the compressor 33. A pressure of a refrigerant detected by the discharge pressure sensor 37 will be referred to as a discharge pressure below.

The heat exchanger temperature sensor 38 is attached to, for example, piping or the like of the outdoor heat exchanger 31. The heat exchanger temperature sensor 38 detects a temperature of the outdoor heat exchanger 31.

The outside temperature sensor 39 is disposed, for example, at a place that is not easily affected by radiant heat of the outdoor heat exchanger 31 or the like in the outdoor unit 3. The outside temperature sensor 39 detects a temperature of outside air of the outdoor unit 3. A temperature of outside air of the outdoor unit 3 detected by the outside temperature sensor 39 will be referred to simply as an outside air temperature below.

The four-way valve 32, the compressor 33, the outdoor expansion valve 34, the outdoor blower 36, the discharge pressure sensor 37, the heat exchanger temperature sensor 38, and the outside temperature sensor 39 are connected to the control unit 40. The four-way valve 32, the compressor 33, the outdoor expansion valve 34, and the outdoor blower 36 are controlled by the control unit 40.

The discharge pressure sensor 37 transmits a signal indicating a detected pressure to the control unit 40. The heat exchanger temperature sensor 38 and the outside temperature sensor 39 transmit signals indicating detected temperatures to the control unit 40.

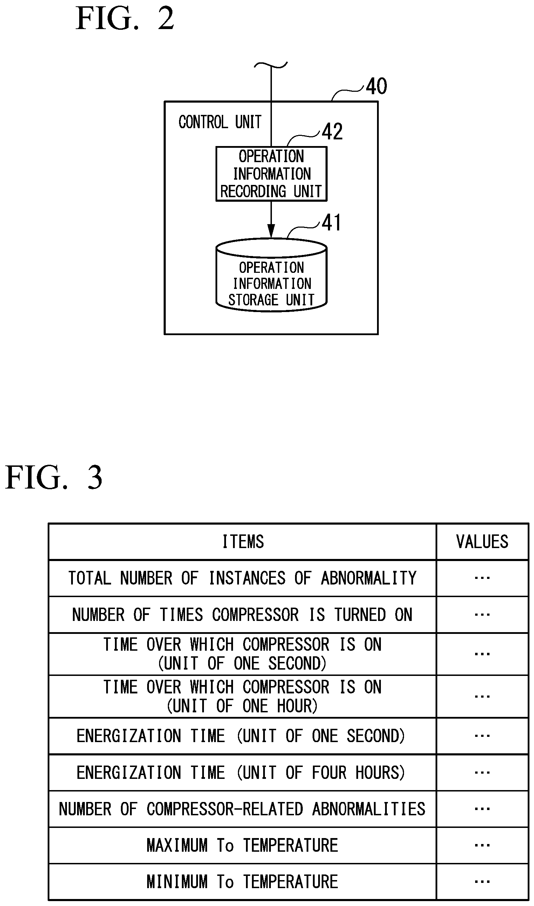

Fig. 2 is a block diagram illustrating a specific example of a functional configuration of the control unit 40 according to the first embodiment. The control unit 40 includes a central processing unit (CPU), a memory, an auxiliary storage device, and the like connected by a bus and executes programs. The control unit 40 functions as a device including the operation information storage unit 41 and the operation information recording unit 42 by executing programs.

Further, some or all of functions of the control unit 40 may be realized by using hardware such as an application specific integrated circuit (ASIC), a programmable logic device (PLD), or a field programmable gate array (FPGA). A program may be recorded on a computer readable recording medium. A computer readable recording medium is a storage device, for example, a portable medium such as a flexible disk, a magneto-optical disc, a ROM, or a CO-ROM, or a hard disk built into a computer system. A program may be transmitted via a telecommunication circuit.

The operation information storage unit 41 is configured using a storage device such as a magnetic hard disk device or a semiconductor storage device. For example, the operation information storage unit 41 is configured using a non-volatile memory such as an electrically erasable programmable read-only memory (EEPROM). The operation information storage unit 41 stores information related to operations of the device itself (which will be referred to as "operation information" below).

Further, in a case where the control unit 40 includes a connection interface such as Recommended Standard-232C (RS-232C) or a Universal Serial Bus (USB), the operation information storage unit 41 may be configured to transmit operation information to an information apparatus connected to the device itself via the connection interface. In addition, the operation information storage unit 41 may be configured as a storage unit that can read operation information without contact based on a near field wireless communication standard such as near field communication (NFC).

The operation information recording unit 42 generates operation information related to an operation of the device itself based on an input signal or input information. The operation information recording unit 42 causes the generated operation information to be stored in the operation information storage unit 41. In addition, when operation information is already stored in the operation information storage unit 41, the operation information recording unit 42 updates the stored operation information to newly generated operation information.

The operation information recording unit 42 receives input of signals for operations of various sensors and various drive units (the compressor, the fan, the motor, and the like) included in the device itself. The operation information recording unit 42 generates, as operation information, information indicating events that can be detected based on measurement information of the various sensors and signals for operations of various drive units.

Fig. 3 is a table showing a specific example of operation information according to the first embodiment. The operation information includes values of items such as, for example, a total number of detected abnormalities (total number of instances of abnormality), the number of transitions of the compressor 33 from a stop state to a drive state (the number of times the compressor is turned on), a total time over which the compressor 33 has performed a compression operation (a time over which the compressor is on), an energization time of the compressor 33 (including stops) (in units of one second or four hours), the total number of abnormalities related to the compressor 33 (the number of compressor-related abnormalities), a maximum value of an outside air temperature (maximum To temperature), a minimum value of an outside air temperature (minimum To temperature), and the like. An operation time of the compressor 33 may be a time based on a time during which the compressor is on or a time based on an energization time.

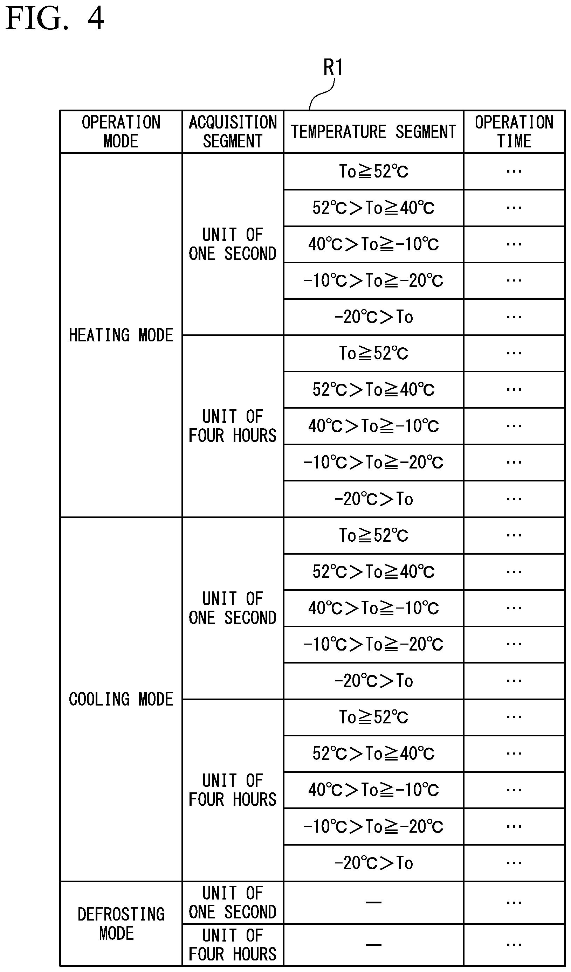

Fig. 4 is a table showing a detailed specific example of operation times recorded in the first embodiment. Operation times are recorded for each range of outside air temperature (temperature segments) in operation information of the present embodiment as illustrated. Operation segments are classified into temperature ranges prescribed at least as operation conditions of the air conditioner 1 (each of which will be referred to as a "prescribed temperature range" below) and other temperature ranges. Fig. 4 shows an example in which operation times of the air conditioner 1 having a prescribed temperature range from -20 °C to 52 °C are recorded in a table including three temperature segments obtained by dividing the prescribed temperature range and two temperature segments indicating ranges other than the prescribed temperature range. Further, the operation times may be recorded in a form other than a table as long as the operation times are associated with temperature segments. Temperature segments may be sub-divided in any units as long as the segments can be classified into prescribed temperature ranges and other temperature ranges.

Furthermore, in the present embodiment, the operation times are recorded in each operation mode of the air conditioner 1. For example, the air conditioner 1 operates in any operation mode including a heating mode for performing a heating operation, a cooling mode for performing a cooling operation, and a defrosting mode for performing a defrosting operation. Fig. 4 shows an example in which the operation times are recorded in each operation mode and each temperature segment. Further, the operation times may be recorded in each of different time units. Fig. 4 shows an example in which the operation times are recorded in units of one second and four hours. A time unit in which operation times are recorded may be arbitrarily determined according to a storage capacity of the operation information storage unit 41 or the like.

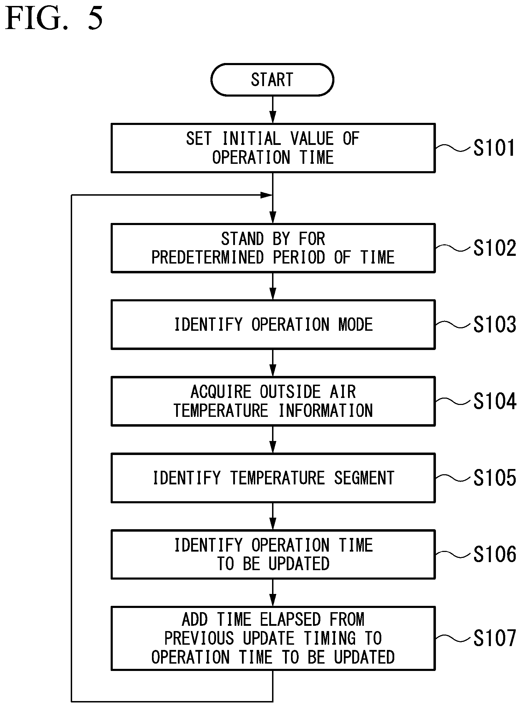

Fig. 5 is a flowchart showing a flow of a process of the air conditioner 1 of the first embodiment to record operation information (which will be referred to as an "operation information recording process"). The process shown in the flowchart of Fig. 5 starts, for example, after activation of the air conditioner 1 is completed. First, the operation information recording unit 42 sets an initial value of an operation time (Step S101). In the example of Fig. 4, the operation information recording unit 42 registers, for example, "0 (zero)" for operation times of all the records. After the operation times are initialized, the operation information recording unit 42 stands by for a predetermined period of time (Step S102).

The standby time is a time taken to a timing at which the operation time is next updated and is set as, for example, an operation time update interval. In a case where operation times in units of one second and units of four hours are acquired as shown in the example of Fig. 4, for example, the air conditioner 1 executes, in parallel, operation information recording processes for which different standby times are set, and thereby operation times in units of one second and units of four hours can be recorded. In the following description of Fig. 5, a case where a standby time is set to 1 second is assumed.

After the standby for the predetermined period of time, the operation information recording unit 42 identifies an operation mode of the device itself (Step S103). Specifically, the operation information recording unit 42 identifies in which operation mode among a heating mode, a cooling mode, and a defrosting mode the device itself is operating based on input signals related to the operations of various drive units and measurement information of each sensor. Further, the operation information recording unit 42 may identify the operation mode of the device itself by acquiring information representing the operation mode (which will be referred to as "operation mode information" below). The operation information recording unit 42 may acquire the operation mode information from, for example, a drive control unit (not illustrated) that controls each drive unit of the device itself.

Next, the operation information recording unit 42 acquires information indicating an outside air temperature (which will be referred to as "outside air temperature information" below) from the outside temperature sensor 39 (Step S104). The operation information recording unit 42 identifies a temperature segment to be updated based on the outside air temperature indicated by the acquired outside air temperature information (Step S105). The operation information recording unit 42 identifies an operation time to be updated based on an identified operation mode of the device itself and the temperature segment identified to be updated (Step S106).

In the example of Fig. 4, for example, if an operation mode of the device itself is a heating mode and an outside air temperature information indicates 30 °C, the operation information recording unit 42 identifies that an operation time of record R1 is subject to update.

The operation information recording unit 42 adds the time elapsed from the previous update timing to the current update timing (i.e., one second here) to the value of the identified operation time to be updated (Step S 107). Then, the operation information recording unit 42 returns to the process of Step S 102 and repeats the processes of Step S102 to Step S107. Since the above processes are performed, the air conditioner 1 can record operation times for each operation mode and each temperature segment.

The air conditioner 1 of the first embodiment configured as described above can record operation times of the compressor 33 for each operation mode and each temperature segment. Since such operation information is recorded, a user (a maintenance engineer, a mechanic, etc.) can understand the environment, the situation, and the like in which the air conditioner 1 is being used in more detail with reference to the operation information. As a result, the user can specify the cause of an abnormality, a failure, or the like more efficiently.

### (Second embodiment)

An air conditioner 1a of a second embodiment (not illustrated) is different from the air conditioner 1 of the first embodiment in that a control unit 40a is included instead of the control unit 40.

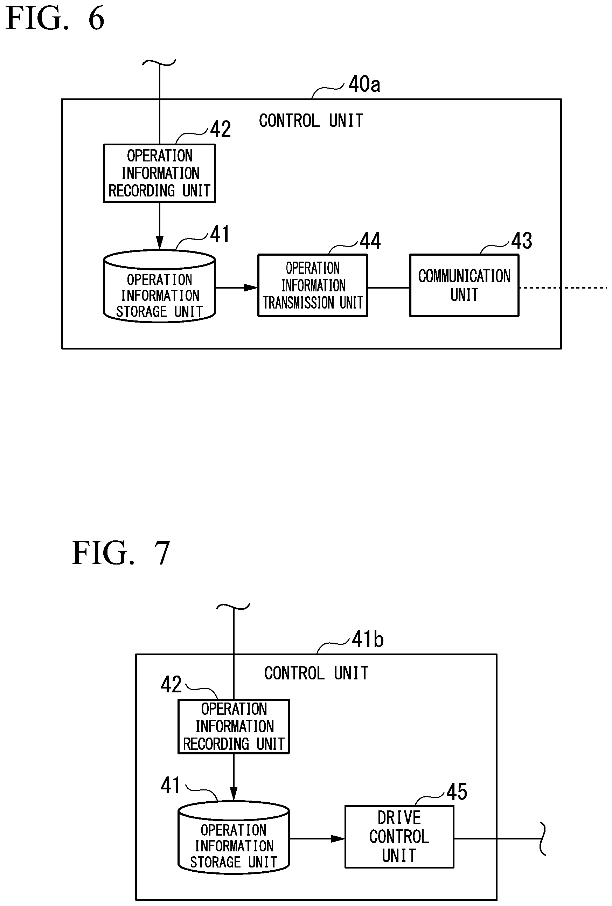

Fig. 6 is a diagram illustrating a specific example of a functional configuration of the control unit 40a according to the second embodiment. The control unit 40a is different from the control unit 40 of the first embodiment in that a communication unit 43 and an operation information transmission unit 44 are further provided. Since other functional units are similar to those of the first embodiment, the same reference numerals as those of Fig. 2 will be given to the units and description thereof will be omitted.

The communication unit 43 includes a communication interface for enabling the device itself to communicate with other communication apparatuses. For example, the communication unit 43 includes a wireless communication interface to wirelessly communicate with a communication apparatus such as a remote-controlling device.

The operation information transmission unit 44 transmits the operation information stored in the operation information storage unit 41 to other communication apparatuses (which will be referred to as an "external apparatus" below) via the communication unit 43.

The air conditioner 1a of the second embodiment configured as described above can transmit the operation information including the operation times of the compressor 33 to the external apparatus. With the above-described configuration, the air conditioner 1a of the second embodiment can report situations of usage of the device itself to the user.

A general remote-controlling device of an air conditioner has a display such as a liquid crystal display or a touch panel. For example, the air conditioner 1a may transmit operation information to such a remote-controlling device. Since the operation information is displayed on the remote-controlling device, a user can change a way of use of the air conditioner 1a according to the display. If operation information is displayed when, for example, an outside air temperature is a low temperature at which durability of the air conditioner 1a is likely to be impaired (generally, when the outside air temperature is about -30 °C to -15 °C, which will be referred to as "a time of extremely low temperature" below), the user can curb deterioration of durability by stopping the use, lowering the temperature set for heating, and the like in exchange for comfort.

Further, the external apparatus that has received the operation information may display the operation information in any form or may display part of the operation information. In addition, the external apparatus may display information obtained by processing or editing the operation information. In addition, processing and editing of the operation information may be performed by the air conditioner 1a. In this case, the operation information transmission unit 44 may transmit the processed or edited operation information acquired from the operation information storage unit 41 to the external apparatus. For example, the operation information transmission unit 44 may generate information indicating a warning about an operation outside the prescribed temperature range or information indicating power consumption based on the operation information and the remote-controlling device may be caused to display the information.

### (Third embodiment according to the invention).

An air conditioner 1b (not illustrated) of a third embodiment is different from the air conditioner 1 of the first embodiment in that a control unit 41b is provided instead of the control unit 40.

Fig. 7 is a diagram illustrating a specific example of a functional configuration of the control unit 41b according to the third embodiment. The control unit 41b is different from the control unit 40 of the first embodiment in that a drive control unit 45 is further provided. Since other functional units are similar to those of the first embodiment, the same reference numerals as those of Fig. 2 will be given to the units and description thereof will be omitted.

The drive control unit 45 controls an operation of each drive unit (the compressor 33, a fan, a motor, etc.) provided in the device itself. Specifically, the drive control unit 45 changes operation conditions of each drive unit when a cumulative operation time in a certain environment is equal to or longer than a predetermined period of time. The drive control unit 45 acquires, for example, an operation time (a cumulative operation time) in a current operation environment (operation mode and temperature segment) with reference to operation information. The drive control unit 45 compares the acquired operation time with a predetermined threshold time and changes the current operation condition of each drive unit to an operation condition associated with the threshold time if the operation time is equal to or longer than the threshold time.

A heating operation in an extremely low temperature environment is generally an operation under the condition that a difference in pressure of refrigerants between a time of compression and a time of evaporation is large (high compression ratio condition). Thus, it is known that durability of the compressor 33 significantly deteriorates when a heating operation in an extremely low temperature environment continues for a long period of time under the same operation condition as a normal heating operation environment. Therefore, when an operation time in an environment which is highly likely to cause deterioration in durability as in a heating operation in an extremely low temperature environment is equal to or longer than a predetermined threshold time, the drive control unit 45 relaxes the operation conditions of the device itself to curb deterioration in durability.

When a cumulative operation time in an extremely low temperature (e.g., an outside air temperature lower than -20 °C) environment is equal to or longer than a predetermined period of time, for example, the drive control unit 45 changes a maximum rotation rate of the compressor 33 to a lower rotation rate than a current rotation rate. **In** addition, in this case, the drive control unit 45 changes, for example, a frequency or a release value of the compressor 33 or rotation rates of the fans of the indoor unit 2 and the outdoor unit 3.

The air conditioner 1b of the third embodiment configured as described above includes the drive control unit 45 that changes operation conditions of the device itself according to whether an operation time in a predetermined environment is equal to or longer than a predetermined time. With the above-described configuration, the air conditioner 1b of the third embodiment can autonomously curb deterioration in durability of the device itself.

According to at least one embodiment described above, an air conditioner that can provide operation information contributing to more effective protection of the product can be provided since the recording unit that records operation times of the compressor provided in the outdoor unit for each outside air temperature range is provided.

While certain embodiments have been described, these embodiments have been presented by way of example only, and are not intended to limit the scope of the invention which is defined in the appended claims.

## Claims

1. An air conditioner with an outdoor unit (3) and an indoor unit (2), the air conditioner comprising:
a recording unit (42) configured to record an operation time of a compressor (33) included in the outdoor unit (3) for each range of outside air temperature when the compressor (33) is operated,
**characterized by**
a control unit (41b) configured to change an operation condition of a drive unit of the air conditioner to curb deterioration in durability of the air conditioner when an operation time of the compressor in a situation in which an outside air temperature is in a specific temperature range is equal to or longer than a predetermined period of time wherein
the control unit (41b) lowers a maximum rotation rate of the compressor when an operation time of the compressor (33) at a temperature that is lower than a predetermined temperature determined according to durability of the air conditioner is equal to or longer than a predetermined period of time,
wherein
the durability of the air conditioner deteriorates by operating the air conditioner at the temperature lower than the predetermined temperature.

2. The air conditioner according to claim 1,
wherein the recording unit (42) records an operation time of the compressor (33) for each operation mode of the air conditioner.

3. The air conditioner according to claim 1 or 2 further comprising:
a transmission unit (44) configured to transmit information related to an operation time of the compressor (33) recorded by the recording unit (42) to other devices.

4. The air conditioner according to anyone of claims 1 to 3,
wherein the control unit (41b) changes a frequency and value of the compressor (33) or a rotation rate of a fan of the indoor unit (2) and the outdoor unit (3) when an operation time of the compressor (33) is equal to or longer than a predetermined period of time.

## Patentansprüche

1. Klimaanlage mit einer Außeneinheit (3) und einer Inneneinheit (2), wobei die Klimaanlage umfasst:
eine Aufzeichnungseinheit (42), die ausgebildet ist, eine Betriebszeit eines in der Außeneinheit (3) enthaltenen Kompressors (33) für jeden Bereich der Außenlufttemperatur aufzuzeichnen, wenn der Kompressor (33) betrieben wird,
**gekennzeichnet durch**
eine Steuereinheit (41b), die ausgebildet ist, eine Betriebsbedingung einer Antriebseinheit der Klimaanlage zu ändern, um eine Verschlechterung der Haltbarkeit der Klimaanlage zu verringern, wenn eine Betriebszeit des Kompressors in einer Situation, in der eine Außenlufttemperatur in einem bestimmten Temperaturbereich liegt, gleich oder länger als eine vorbestimmte Zeitdauer ist, wobei
die Steuereinheit (41b) eine maximale Rotationsrate des Kompressors senkt, wenn eine Betriebszeit des Kompressors (33) bei einer Temperatur, die niedriger als eine vorbestimmte Temperatur ist, die gemäß der Haltbarkeit der Klimaanlage bestimmt wird, gleich oder länger als eine vorbestimmte Zeitdauer ist,
wobei
sich die Haltbarkeit der Klimaanlage durch den Betrieb der Klimaanlage bei einer Temperatur, die niedriger als die vorbestimmte Temperatur ist, verschlechtert.

2. Klimaanlage nach Anspruch 1,
wobei die Aufzeichnungseinheit (42) eine Betriebszeit des Kompressors (33) für jeden Betriebsmodus der Klimaanlage aufzeichnet.

3. Die Klimaanlage gemäß Anspruch 1 oder 2 ferner umfassend:
eine Übertragungseinheit (44) ausgebildet, um Informationen bezüglich einer Betriebszeit des Kompressors (33), die von der Aufzeichnungseinheit (42) aufgezeichnet wurden, an andere Geräte zu übertragen.

4. Klimaanlage gemäß einem der Ansprüche 1 bis 3,
wobei die Steuereinheit (41b) eine Frequenz und einen Wert des Kompressors (33) oder eine Drehzahl eines Lüfters der Innenraumeinheit (2) und der Außenraumeinheit (3) ändert, wenn eine Betriebszeit des Kompressors (33) gleich oder länger als eine vorbestimmte Zeitdauer ist.

## Revendications

1. Appareil de conditionnement d'air avec une unité externe (3) et une unité interne (2), l'appareil de conditionnement d'air comprenant :
une unité d'enregistrement (42) configurée pour enregistrer une durée de fonctionnement d'un compresseur (33) inclus dans l'unité externe (3) pour chaque plage de température d'air extérieur quand le compresseur (33) est mis en fonctionnement,
**caractérisé par**
une unité de commande (41b) configurée pour changer une condition de fonctionnement d'une unité d'entraînement de l'appareil de conditionnement d'air pour freiner une détérioration dans une durabilité de l'appareil de conditionnement d'air quand une durée de fonctionnement du compresseur dans une situation dans laquelle une température d'air extérieur est dans une plage de température spécifique est égale ou plus longue qu'une période temporelle prédéterminée, dans lequel
l'unité de commande (41b) abaisse une vitesse de rotation maximum du compresseur quand une durée de fonctionnement du compresseur (33) à une température qui est inférieure à une température prédéterminée déterminée en accord avec une durabilité de l'appareil de conditionnement d'air est égale ou plus longue qu'une période temporelle prédéterminée,
dans lequel
la durabilité de l'appareil de conditionnement d'air se détériore en faisant fonctionner l'appareil de conditionnement d'air à la température inférieure à la température prédéterminée.

2. Appareil de conditionnement d'air selon la revendication 1,
dans lequel l'unité d'enregistrement (42) enregistre une durée de fonctionnement du compresseur (33) pour chaque mode de fonctionnement de l'appareil de conditionnement d'air.

3. Appareil de conditionnement d'air selon la revendication 1 ou 2, comprenant en outre :
une unité de transmission (44) configurée pour transmettre à d'autres dispositifs des informations en lien avec une durée de fonctionnement du compresseur (33) enregistrées par l'unité d'enregistrement (42).

4. Appareil de conditionnement d'air selon l'une quelconque des revendications 1 à 3,
dans lequel l'unité de commande (41b) change une fréquence et une valeur du compresseur (33) ou une vitesse de rotation d'un ventilateur de l'unité interne (2) et de l'unité externe (3) quand une durée de fonctionnement du compresseur (33) est égale ou plus longue qu'une période temporelle prédéterminée.
